Europäisches Patentamt

(19) European Patent Office

Office européen des brevets

(11) Publication number: **0 002 945**
**B1**

# EUROPEAN PATENT SPECIFICATION

(12)

(45) Date of publication of patent specification: **12.01.83**

(21) Application number: **78300888.1**

(22) Date of filing: **21.12.78**

(51) Int. Cl.³: **G 03 B 35/14,**
**G 02 B 27/22, G 03 C 9/02**

(54) Method and apparatus of making a stereogram.

(30) Priority: **27.12.77 US 864759**

(43) Date of publication of application:
**11.07.79 Bulletin 79/14**

(45) Publication of the grant of the patent:
**12.01.83 Bulletin 83/2**

(84) Designated Contracting States:
**DE FR GB NL SE**

(56) References cited:
**CH - A - 486 722**
**DE - A - 1 597 167**
**DE - A - 1 597 168**
**DE - C - 1 139 731**
**US - A - 3 684 370**
**US - A - 3 895 867**
**US - A - 3 978 500**

(73) Proprietor: **THE THREE DIMENSIONAL**
**PHOTOGRAPHY CORPORATION**
**955 Yonkers Avenue**
**Yonkers New York 10704 (US)**

(72) Inventor: **Smith, Edgar Charles**
**2169 23rd Street, Long Island City**
**Queens, New York 11105 (US)**
Inventor: **Campbell, James Bernard**
**270 Seaman Avenue**
**New York, N.Y. 10034 (US)**

(74) Representative: **Geldard, David Guthrie et al,**
**URQUHART-DYKES AND LORD 11th Floor, Tower**
**House Merrion Way**
**Leeds, LS2 8PB West Yorkshire (GB)**

Courier Press, Leamington Spa, England

Method and apparatus of making a stereogram

This invention is directed to a method and apparatus for making a stereogram, that is a parallax or free vision stereogram, and particularly for the accurate registration of a plurality of film images in order to ensure stereographic reproduction.

United States Patent No. 3,684,370 discloses an enlarger for making stereograms from a plurality of images of the same subject. The images are exposed frame by frame through a lenticular screen onto photographic material, each exposure producing a series of strip images on the material. Between each exposure the screen is incrementally advanced over the photographic material and the next frame is moved into the exposure position under control of a micrometer. The degree of accuracy of registration that can be achieved by this system leaves room for improvement and the apparatus lacks versatility of composition for the finished stereogram.

In accordance with the invention a method of making a stereogram from a plurality of film frames each containing an image of the same subject, the images being stereo related, by exposing the images frame by frame to produce a series of images on photosensitive material, which images may then be viewed through a viewing screen; is characterized in that the film frames used have had the frame area surrounding each image marked in accordance with homologous points of each of the images and by the steps of providing a line grid having a repeating pattern of alternating opaque and transparent portions, the width of the transparent portion in each basic repeat of the pattern being equal to the total width of the basic repeat divided by the number of frames to be printed; superimposing the line grid over photosensitive material; using the mark on the frame area surrounding a first image to locate a first frame relative to an optical projector so as to project the homologous point of the first image towards a selected point on the material; exposing on the material a first portion of the first image equal to the width of the transparent portion of the line grid while maintaining the line grid stationary; using the mark on the frame area surrounding a second image to locate a second frame relative to the optical projector so as to project the homologous point of the second image towards the selected point on the material; exposing on the material a second portion of the second image equal to the width of the transparent portion of the line grid while maintaining the line grid stationary after causing a linear incremental relative movement equal to the width of a transparent portion between the line grid and the material; repeating sequentially the location and exposing steps for each remaining frame; and superimposing a viewing screen over the subsequently developed material. The plurality of film frames may be in a continuous strip form. Each film frame may be located by mechanical or optical sensing of the mark. The marks may have been caused by the removal of a portion from the frame area surrounding each image or by causing an optical density differential. If the marks are apertures in the surrounding frame area, location may be provided by pins extending through the apertures. Alternatively, if each mark comprises a plurality of mark elements, by optically sensing the mark a signal can be produced by each mark element. The signals may then be compared and the film frame position adjusted until the signals are substantially equal. The optical sensing can be by scanning the mark or mark elements or by projecting an optical source and determining the source in relation to the mark or mark elements.

Further according to the invention a projection printing apparatus for making a stereogram from a plurality of film frames each bearing an image of the same subject, the images being stereo related, comprises an optical projector having a light source and an enlarger lens, a support for the plurality of film frames and a support for photosensitive material, and is characterized by registration means responsive to a mark on the frame area surrounding each image for locating the frame in a desired position according to the mark and relative to the optical projector, the marks having been made in accordance with homologous points of each of the images; a line grid disposed between the film frame and the photosensitive material, the line grid having a repeating pattern of alternating opaque portions and transparent portions, the width of the transparent portion in each basis repeat of the pattern being equal to the total width of the basic repeat divided by the number of frames to be printed; the optical projector being capable of optically projecting each image through the line grid onto the photosensitive material so as to project the homologous point towards a selected point on the material and expose on the material a portion of each image equal to the given width of the transparent portions; and means for causing a linear incremental relative movement between the line grid and the material, with each incremental movement equal to the width of a transparent portion.

The invention solves the problem of accurate registration of frames in projection printing apparatus and assists in obtaining high quality stereograms.

The invention will be better understood from the following description thereof taken in conjunction with the accompanying drawings, in which:

Figure 1 is a schematic of an optical means for generating the frame registration marks;

Figures 2, 3 and 4 are partial schematics of a film frame showing several embodiments of the registration marks;

Figure 5 is a partial schematic of the projection printing apparatus comprising the enlarger and line grid for the printing of the image;

Figure 6 is a partial schematic of the assembled stereoscopic photograph showing a lenticular viewing screen;

Figure 7 is a partial cross-sectional view of a mechanical means for registering the film frame;

Figure 8 is a partial schematic of an optical sensing means for registering the film frame;

Figure 9 is a block diagram showing a servo system for adjusting the film frame position; and

Figure 10 is a partial schematic of the relationship between the servo system and the film frame.

Application Serial No. 78300887.3 (published under No. 2944) discloses an apparatus and method for marking film material comprising a plurality of film frames each bearing an image of the same subject, the images being stereo related. The apparatus comprises a support for supporting a carriage assembly, the carriage assembly being movable on the support and having a transparent member for supporting the film. Optical means on the support permit the optical viewing of at least two images and the determining of a stereo base distance between homologous points of those images. As used herein "homologous points" is defined as two point images, in a stereo related pair of images, which point images exactly correspond. A mark is placed on each frame area surrounding the respective images, the marks being in accordance with the homologous points of the images. The marks, to be used to locate each film frame in the method and apparatus of the present invention may be caused by the removal of a portion from the area surrounding each image or by causing an optical density differential. The marks can be effected mechanically, as by a punch, or optically, as by a focused laser. The laser or other narrow beam of radiation, removes or adds density to a portion of the emulsion layer surrounding each image. The markings associated with each frame can be arranged in a different size, orientation or shape relative to the frame or to each other. The marks permit correct registration of each film frame relative to an optical projector prior to the printing of each image, and mechanical or optical sensing means may be used to cooperate with the marks in establishing registration.

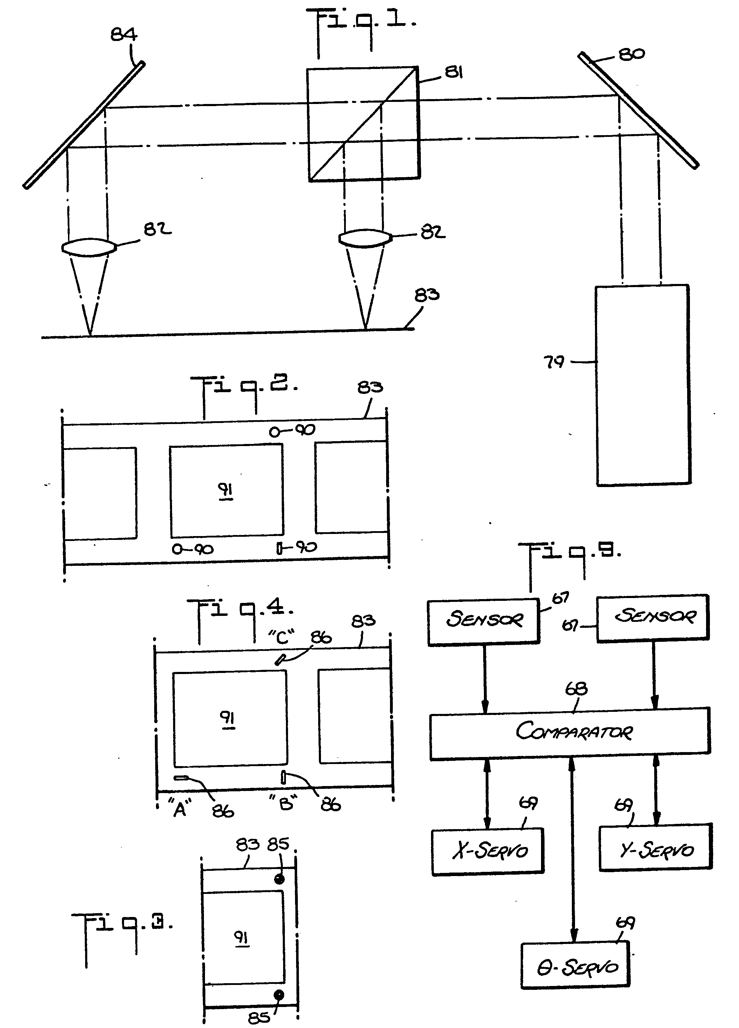

Figure 1 shows schematically one way in which film can be marked for subsequent use in this invention. The optical beam of a laser 79, preferably having a wavelength of 0.7 to 0.3 microns, is reflected from a mirror 80 to a beam splitter 81. Beam splitter 81 divides the optical beam into two beams which are directed onto the film 83 through lenses 82. One of the two divided beams is directed onto the film 83 by a mirror 84. The laser removes a selected portion of the emulsion layer from the frame area surrounding an image 91 or adds to the optical density of a portion of the emulsion layer or may cause a removal of part of the film and provide an aperture. In an alternative marking system an aperture may be formed by a mechanical punch.

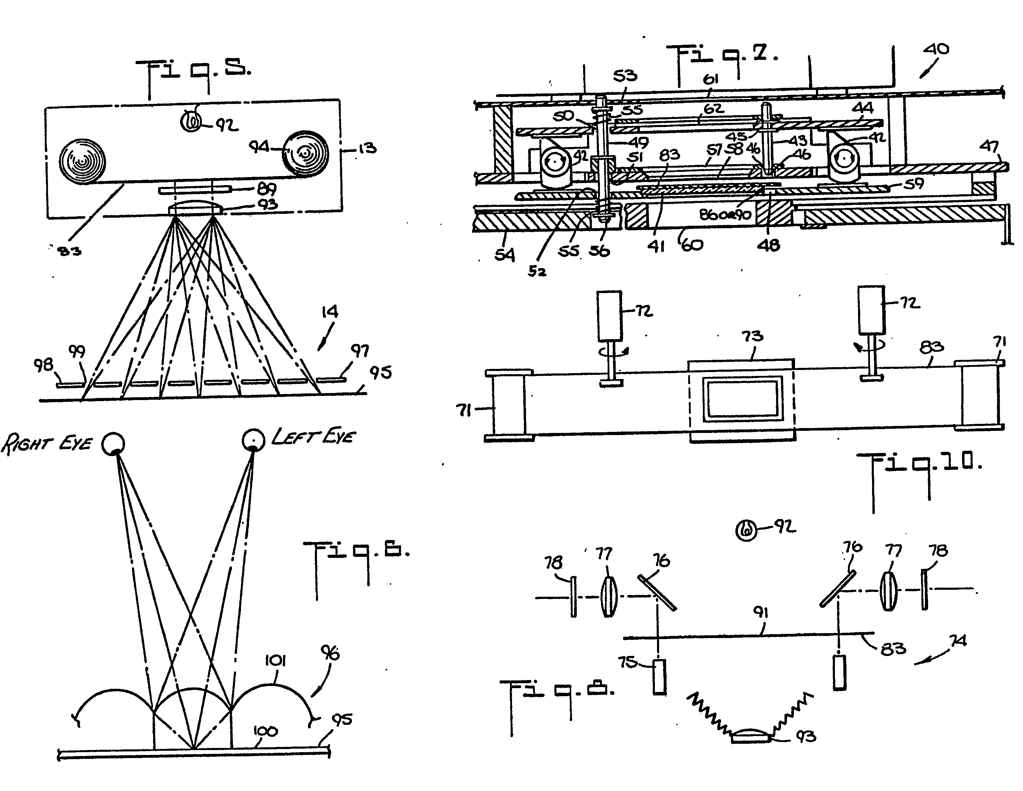

The marks on the film 83, whether optically or mechanically formed, are representatively shown in Figures 2 to 4. Each mark shown comprises a number of mark elements, or markings, which may be arranged in a different orientation, size, shape or location relative to the frame or to each other. The orientation, size, shape or location differentiation permits the recognition of the correct registration for each film frame by a mechanical means or optical sensor responsive to the marks during the printing step of each image. In Figure 1 there is disclosed dividing the optical beam into two beams. It is understood that the number of optical beams can be varied as necessary to ensure proper registration. In a similar manner the number of mechanical punches may vary. In Figures 2 to 4 the marks are shown as being circular and rectangular. The shape of the mark is not critical and other shapes are possible. By way of example the laser optical beam or the mechanical punch may be shaped to provide any regular or irregular polygonal configuration. In Figure 2 two of the three marks 90 are of the same shape but are in diagonally opposite locations with respect to the image 91. In Figure 3 two similarly shaped marks 85 are shown, each mark located adjacent opposing sides of the image and adjacent a side common to the opposing sides. In Figure 4 the three marks 86 are each of the same shape but are in a different orientation relative to the image 91. It is understood that the location of the marks relative to each othher or to the film frame or the location of the marks on the frame area surrounding the image is not critical. In Figure 3, for example, the narrow well-defined laser optical beam has caused a change in the optical density of the film 83 adjacent to the image 91 and produced marks 85. In Figures 2 and 4, for example, the laser optical beam has provided in the film 83 adjacent to the image 91 a plurality of apertured marks 90 and 86, respectively.

Figure 5 schematically shows the overall projecting printing apparatus. Enlarger 13 includes an optical source 92 which projects through lens 93 a selected image from a frame of the film 83. The film 83 is stored in a cassette 94 which has been removed from the camera and processed. Located between the film 83 and the lens 93 is registration means 89 which positions the selected film frame prior to projection and printing. The image 91 from the frame is projected through a line grid 14 onto photosensitive material 95, with the selected homologous point of the image directed towards a selected point on the material. The line grid 14 comprises a movable line grid 97 which is divided into a plurality of opaque sections 98 and transparent sections 99 extending across the width of the grid in a repeating pattern. The basic repeating pattern has a width equal to the width of the base 100 of each lens 101 on the lenticular screen 96, as shown in Figure 6. The width of the transparent portion 99 of each basic repeat of the pattern is determined by dividing the total width of the basic repeat by the number of frames to be projected and printed. Stated in another manner the width of the transparent portion 99 of each basic repeat of the pattern is equal to the number of camera lenses, i.e. the number of simultaneously taken frames, divided into the total width. For example, if there are seven lenses and the total width of the basic repeat of the pattern ·is 0.533 mm, then the width of the transparent portion 99 is 0.076 mm and the opaque portion is 0.457 mm. The total number of basic repeats of the pattern is equal to the total number of parallel lenses 101 on the lenticular viewing screen 96 of the final product. The line grid 97 is located between the enlarger 13 and the photosensitive material, on which the print is to be formed. This material may be either positive or negative. Any commercially available photosensitive film can be used to provide the plurality of images. Preferably the film should be dimensionally stable and an Estar (Trade Mark) based film is especially desirable if the marking is accomplished mechanically.

In processing each image is printed onto the material 95 and simultaneously across the entire grid 97 for the width of each of the transparent portions 99 of the repeating pattern. For each frame the homologous point of the image is directed towards the selected point on the material 95. When the film 83 is a continuous strip, the film is advanced by one frame and the grid 97 is moved in the same direction in 0.076 mm increments so as to print simultaneously across the paper 95 each successive frame. Each of the images 91, for example, seven, is printed sequentially but for each lens 101 of the lenticular viewing screen 96. At the completion of the processing in the line grid 97 the material 95 has a plurality of prints across the paper equal in number to the number of lenses 101 on the lenticular viewing screen 96, the width of each print being equal to the base 100 of each lens of the viewing screen and each print comprising each one of all the film images 91.

The photosensitive material 95 is then processed to produce a picture of the photographed subject. The lenticular viewing screen 96 is placed over the picture so as to align each lens base 100 with a respective one of the now-developed repeating patterns and laminated into a fixed position. The fact that the homologous points have all been projected to a common selected point on the surface of the material 95 establishes the image plane containing those homologous points as the centre plane image, i.e. as that image appearing to be in the surface plane of the photosensitive material when that material is viewed through the lenticular screen. The centre plane image is commonly referred to as the "aim plane" and any particular selected point in that plane as the "aim point".

Preferably the film frames are formed on a continuous film strip. However the method of the present invention can also be practiced using a plurality of separate film frames containing images provided from a plurality of cameras or from a plurality of camera positions.

Figures 7 to 9 disclose several embodiments of means 89 for registering a selected film frame in the projecting printing apparatus. In Figure 7 a mechanical registration means 40 is shown comprising cam actuated pins which extend through the registration aperture marks 86 or 90 on the film 83. Figure 7, a schematic cross-sectional view, shows the film 83 disposed on a transparent member 41. The transparent member 41 is mounted in a support 59 of an intermediate frame portion 47. Located over the film 83 is the registration means 40 comprising cams 42 and pins 43. As shown in Figure 7 the rotation of cams raise and lower a pin plate 44. The pin 43 is secured to the pin plate 44 by nut 45. The pin 43 extends through an opening 46 in intermediate frame portion 47, the aperture 86 or 90 and an opening 48 in support 59. The intermediate frame portion 47 has openings 57, 58 to permit the projection of the image. In Figure 7 the pin plate is shown in the raised position so as to disengage the pin from the film. Only one pin is shown it being understood that there may be more than one pin and the number of pins may be equal to the number of aperture registration marks on the film. As noted earlier, the cross-sectional shape of the pins may be complementary to the shape of the aperture marks. As noted earlier, the number, shape, location orientation and size of the aperture marks may be formed by a suitably shaped and directed mechanical punch or optical beam. A guide pin 49 extends through an opening 50 in the pin plate 44, an opening 51 in intermediate frame 47 and an opening 52 in the support 59. The guide pin 49 is supported between an upper frame portion 53 of the registration means 40 and a lower frame portion 54 by springs 55 and a nut 56 threaded onto one end of the pin. It is understood that there may be more than one guide pin. The lower frame portion 54 has an opening 60 and the upper frame portion 53 has openings 61, 62 to permit the projection of the image. During the raising and lowering of the pin the guide pin provides means for preventing the misalignment of the pin with the registration aperture and reduces the possibility of damaging the film. In operation a first frame of the film is disposed on the transparent member and the cams are rotated allowing the pin to be lowered and extend through the registration aperture. After extending through the aperture the film frame position may be maintained by a clamp means. The optical source 92 causes the image to be projected through the lens 93 onto the line grid 14. The image is projected through transparent portions 99 of the line grid 97 onto photosensitive material 95, with the homologous point of the image directed towards a selected point on the material. A second film frame is then disposed on the transparent member and registered with the pins extending through the aperture. An incremental relative movement between the line grid 97 and paper 95 is provided preferably by the movement of the line grid 97. The magnitude of the incremental relative movement is equal to the width of the transparent portion 99. As noted earlier, the width of the transparent portion 99 is determined by the total width of the basic repeat of the pattern divided by the number of film frames to be projected. The optical source 92 causes the second image to be projected through the lens 93 onto the line grid 14. The second image is projected through transparent portions 99 of line grid 97 onto photosensitive material 95, with the homologous point of the image directed towards the selected point on the material. Third and subsequent film frames are disposed on the transparent support and registered. An incremental relative movement between the line grid and the material is provided and each image is projected onto the material, again with the homologous point of each image directed towards the selected point on the material.

The number of images is determined by the number of effective objective lenses on the camera or the number of images of the same subjecct which are to be used to form the stereogram. Where the plurality of film frames are in the form of a continuous film strip, such as in a cassette 94, the incremental relative movement of the line grid should be in the same direction to that of the advance of the film strip through the projection printing apparatus. A continuous film strip is shown in Figure 10 extending between film spindles 71. Film motor 72 permits the advance or reverse of the film strip relative to the registration support.

Figure 8 schematically shows an optical registration means 74. A plurality of solid state optical sources 75, such as light emitting diodes, each project a beam of radiation onto the film 83 in the vicinity of the registration marks. After passing through the film 83 the beam is reflected by mirror 76 onto a lens 77 which projects the beam to a multi-element optical sensor 78. The intensity of the beam received at sensor 78 is determined by the relative position between the registration marks and the radiation from the optical source. As noted earlier, the registration mark can be an aperture in the film which will not attenuate the intensity of the beam as compared to the film itself. Alternatively the registration mark can reduce the intensity of the beam relative to the film itself where the mark has a greater optical density. The desired position of the film frame can be achieved by adjusting the relative position of the film to the beam so as to cause the output of each sensor to be substantially equal. The film frame can be part of a continuous strip and can use the apparatus of Figure 10. In operation the optical registration means of Figure 8 is the same as that of the mechanical registration means of Figure 7.

In another embodiment of the optical registration means the film can be scanned to determine the location of the registration marks. A well-defined focused scanning radiation source is projected onto the moving film strip in the vicinity of the registration marks. The radiation source can be sinusoidally scanned at 500 Hz. Referring for example to Figure 4, an optical sensor for registration mark "A" will sense the mark A for a longer period of time than the optical sensors for marks B and C. For example, consider the marks "A", "B" and "C" as a rectangular shape having a length of 2.54 mm and a width of 0.254 mm. In the film advance or rewind directions (X-direction), at a film speed of 2.54 cm mm/second, the A sensor can "see" the A registration mark for 0.1 seconds. At the 500 Hz scanning rate the signal to the A sensor would persist for 100 successive scan half-cycles. The orientation in the X-direction of the B and C registration marks relative to the film however, causes the signal from the sensors for each of these marks to persist for a considerably lesser amount of time, e.g., 10 successive scan half-cycles. Thus, sensor logic can determine the simultaneous occurrence of (a) a number of successive A sensor signals (say 30) sufficient to distinguish from the maximum possible successive B and C signals of 10 each, at the appropriate intersignal period of 0.001 seconds and (b) 500 Hz signals present from the B and C sensors. When this condition is detected the motor causing the film travel can be braked and stopped. The stationary film can be fixed in position on a film support table 73 by a clamping means. Sensor logic, as in Figure 9, can then actuate a servo fine motion system for the table and so position the film frame. The servo system has sensors 67 for each of the marks, such as marks "A", "B" and "C", which can responsively position the table in the X, Y and $\theta$ directions until the sensor signals are substantially equal. The X-direction is the wind or rewind direction; the Y-direction is transverse to the X-direction; and the $\theta$ direction is the angular rotation of the film frame. The output of each sensor 67 is the input to a comparator 68. The output of the comparator 68 actuates respective X, Y and $\theta$ direction servos 69 which positions the film frame on support 73. When the signals are substantially equal the image from the frame can be projected onto the line grid 14.

The sensor logic of Figure 9 can also be used with the optical sensing embodiment described in Figure 8. In addition, instead of the radiation source the optical sensor can do the scanning.

In the registration means described herein the tolerance for overall alignment of any film frame should not exceed a circle of 0.0254 mm diameter. Stated in another manner any representative small common feature of each of the film images for a particular stereogram should be brought, in the projection printing apparatus, to within 0.0127 mm of an "average" point. The solid state optical source of Figure 8 on the scanning radiation source is preferably in the blue wavelength to take advantage of the greater film optical density of the film at that wavelength. The film may be of any size or type so as to be compatible with the apparatus or user requirements or vice versa.

In Application Serial No. 78300887.3 published under No. 2944 there is disclosed an apparatus and method for selecting the homologous points after the photographic film has been exposed with a given subject, and marking the film frames accordingly. During the projection printing according to this application an operator or person viewing the print may decide that the picture would be more pleasing or aesthetically improved if, after the film frame is located by the marks, the centre plane image was moved forward or backward from that plane previously established by selection of the homologous points. The centre plane image can be adjusted by moving the enlarger lens 93 in small predetermined horizontal increments to displace the projected image relative to the photosensitive material more or less than the stereo base distance or appropriate fraction thereof. Alternatively the centre plane image can be adjusted by the incremental horizontal movement of the line grid 97 and photosensitive material 95 together, so also displacing the projected image relative to the photosensitive material. In either technique the film frame being projected remains fixed on the registration means, as located thereon by the marks. Displacement of the projected image so as to change the centre plane image can be used to permit any degree of enlargement of the entire film image. Similarly such a displacement of the projected film image can be used to permit the enlargement and/or stereographic reproduction of any corresponding portions of the film images. Such enlargement does not have to be to an exact size to match the screen pitch of the lenticular screen 96.

As disclosed above the incremental movement between the film direction and the line grid is such that the grid is moved in the same direction as the film while the photosensitive material is stationary. Alternatively the grid may be stationary and the incremental relative movement provided by moving the material in the direction opposite to that of the film.

## Claims

1. A method of making a stereogram from a plurality of film frames each containing an image of the same subject, the images being stereo related, by exposing the images frame by frame to produce a series of images on photosensitive material, which images may then be viewed through a viewing screen; characterized in that the film frames used have had the frame area surrounding each image marked in accordance with homologous points (defined as two point images, in a stereo related pair of images, which point images exactly correspond) of each of the images and by the steps of providing a line grid having a repeating pattern of alternating opaque and transparent portions, the width of the transparent portion in each basic repeat of the pattern being equal to the total width of the basic repeat divided by the number of frames to be printed, superimposing the line grid over photosensitive material; using the mark on the frame area surrounding a first image to locate a first frame relative to an optical projector so as to project the homologous point of the first image towards a selected point on the material; exposing on the material a first portion of the first image equal to the width of the transparent portion of the line grid while maintaining the line grid stationary; using the mark on the frame area surrounding a second image to locate a second frame relative to the optical projector so as to project the homologous point of the second image towards the selected point on the material; exposing on the material a second portion of the second image equal to the width of the transparent portion of the line grid while maintaining the line grid stationary after causing a linear incremental relative movement equal to the width of a transparent portion between the line grid and the material; repeating sequentially the location and exposing steps for each remaining frame; and superimposing a viewing screen over the subsequently developed material.

2. A method according to claim 1 characterized in that the plurality of film frames is on a continuous strip and wherein the incremental movement is a movement of the line grid in the same direction as the strip is moved to place the second and remaining frames in location relative to the optical projector.

3. A method according to claim 1 characterized in that the plurality of film frames is on a continuous strip and wherein the incremental movement is a movement of the photosensitive material in a direction opposite to that in which the strip is moved to place the second and remaining frames in location relative to the optical projector.

4. A method according to any one of the preceding claims characterized by the step, prior to the exposing step for any selected image, of displacing the projected image relative to the photosensitive material by moving in horizontal increments an enlarger lens projecting the image on to the photosensitive material.

5. A method according to any one of claims 1 to 3 characterized by the step, prior to the exposing step for any selected image of displacing the projected image relative to the photosensitive material by moving the line grid and photosensitive material together in horizontal increments.

6. A method according to any one of the preceding claims characterized in that each mark is registered mechanically to locate the respective film frame.

7. A method according to any one of claims 1 to 5 characterized in that each mark is registered optically to locate the respective film frame.

8. A method according to any one of claims 1 to 7 characterized in that the mark on the frame area surrounding each image comprises a plurality of mark elements and location is effected by sensing the mark elements to produce a signal for each mark element, and adjusting the film frame position until the signals are substantially equal.

9. A method according to claim 8 characterized in that the sensing of the mark elements is effected by a scanning optical source.

10. A method according to claim 8 characterized in that the sensing of the mark elements is effected by a scanning optical sensor.

11. A method according to claim 6 characterized in that the mark on the frame area surrounding each image comprises a plurality of apertures and the locating step comprises aligning the apertures with registration pins and extending the pins through the apertures.

12. A projection printing apparatus for making a stereogram from a plurality of film frames each bearing an image (91) of the same subject, the images being stereo related, comprising an optical projector (13) having a light source (92) and an enlarger lens (93), a support (41, 59 or 73) for the plurality of film frames and a support for photosensitive material (95), characterized by registration means (49 or Figs. 8 or 9) responsive to a mark (85, 86 or 90) on the frame area surrounding each image (91) for locating the frame in a desired position according to the mark and relative to the optical projector (13), the marks having been made in accordance with homologous points (defined as two point images, in a stereo related pair of images which point images exactly correspond) of each of the images; a line grid (97) disposed between the film frame and the photosensitive material (95), the line grid having a repeating pattern of alternating opaque portions (98) and transparent portions (99), the width of the transparent portion in each basic repeat of the pattern being equal to the total width of the basic repeat divided by the number of frames to be printed; the optical projector being capable of optically projecting each image through the line grid onto the photosensitive material so as to project the homologous point towards a selected point on the material and to expose on the material a portion of each image equal to the given width of the transparent portions; and means for causing a linear incremental relative movement between the line grid and the material, with each incremental movement equal to the width of a transparent portion.

13. An apparatus according to claim 12 characterized in that the incremental movement means causes the line grid (97) to move.

14. An apparatus according to claim 13 for use when the plurality of film frames are on a continuous film strip (83), characterized in that the incremental movement means causes movement of the line grid (97) in the same direction as the movement of the film strip prior to location of each film frame.

15. An apparatus according to claim 12 for use when the plurality of film frames are on a continuous film strip (83), characterized in that the incremental movement means causes movement of the photosensitive material (95) in a direction opposite to the movement of the film strip prior to location of each film frame.

16. A projection printing apparatus according to any one of claims 12 to 15 characterized in that the enlarger lens (93) is movable in horizontal increments for displacing the projected image relative to the photosensitive material prior to the exposing step for that image.

17. A projection printing apparatus according to any one of claims 12 to 15 characterized in that the line grid (97) and photosensitive material (95) are movable together in horizontal increments for displacing the projected image relative to the photosensitive material prior to the exposing step for that image.

18. An apparatus according to any one of claims 12 to 17 characterized in that the registration means comprises a retractable pin (49) which can engage with, and extend through, an aperture constituting a mark on the frame area surrounding each image.

19. An apparatus according to claim 12 characterized in that the registration means comprises optical means (74) for sensing the mark on the frame area surrounding each image and producing a signal for each mark.

20. An apparatus according to claim 19 characterized in that the optical means comprise a light source (75) and light-sensitive output means (78), either the source or the output means being capable of scanning each mark.

21. An apparatus according to claim 20 characterized in that the optical means comprises a solid state light source (75) and a multi-element optical sensor (78).

22. An apparatus according to any one of claims 12 to 21 in which the mark on the frame area surrounding each image comprises a plurality of mark elements (85, 86 or 90), and characterized in that the registration means includes means responsive to the mark elements to adjust the film frame to the desired position.

23. An apparatus according to claim 22 characterized in that each of the mark elements has a different relative orientation to the film frame (Figs. 2 or 4).

24. An apparatus according to claim 22 or 23 characterized in that the registration means comprises a sensor (67) for sensing each mark element on the frame area surrounding a respective image and producing a signal for each mark element; and a comparator (69) for determining when the signals are substantially equal.

**Revendications**

1. Procédé de formation d'un stéréogramme à partir de plusieurs images de film contenant chacune une image du même sujet, les images étant en relation stéréoscopique, par exposition des images vue par vue pour produire une série d'images sur une matière photosensible, ces images étant ensuite observées à travers un écran d'observation, caractérisé en ce que les images de film utilisées ont eu la surface d'image entourant chaque image marquée en fonction de points homologues de chacune des images, points définis comme deux images de points dans un couple d'images en relation stéréoscopique, ces images de points se correspondant exactement et par les phases de production d'une grille linéaire comportant une configuration répétitive de parties opaques et transparentes alternées, la largeur de la partie transparente de chaque répétition de base de la configuration étant égale à la largeur totale de la répétition de base divisée par le nombre des images à tirer, de superposition de la grille linéaire sur une matière photo-sensible; d'utilisation du marquage sur la surface d'image entourant une première image pour positionner une premiere image par rapport à un projecteur optique afin de projeter le point homologue de la première image sur un point sélectionné de la matière; d'exposition sur la matière d'une première partie de la première image égale à la largeur de la partie transparente de la grille linéaire tout en maintenant la grille linéaire immobile; d'utilisation du marquage sur la surface d'image entourant une seconde image pour positionner une seconde image par rapport au projecteur optique afin de projeter le point homologue de la seconde image vers le point sélectionné sur la matière; d'exposition sur la matière d'une second partie de la seconde image égale à la largeur de la partie transparente de la grille linéaire tout en maintenant la grille linéaire immobile après avoir produit un mouvement relatif incrémental linéaire égal à la largeur d'une partie transparente entre la grille linéaire et la matière; de répétition séquentielle des phases de positionnement et d'exposition pour chaque image restante; et de superposition d'un écran d'observation sur la matière ensuite développée.

2. Procédé selon la revendication 1, caractérisé en ce que la pluralité des images de film se trouve sur une bande continue, et en ce que le mouvement incrémental est un mouvement de la grille linéaire dans la même direction que la bande est déplacée pour amener la seconde image et les autres en position par rapport au projecteur optique.

3. Procédé selon la revendication 1, caractérisé en ce que la pluralité des images de film se trouve sur une bande continue et en ce que le mouvement incrémental est un mouvement de la matière photo-sensible dans une direction opposée à celle dans laquelle la bande est déplacée pour amener la seconde image et les autres en position par rapport au projecteur optique.

4. Procédé selon l'une quelconque des revendications précédentes, caractériseé par la phase, avant la phase d'exposition de toute image sélectionnée, de déplacement de l'image projetée par rapport à la matière photo-sensible en déplaçant par incréments horizontaux un objectif d'agrandisseur projetant l'image sur la matière photo-sensible.

5. Procédé selon l'une quelconque des revendications 1 à 3, caractérisé par la phase, avant la phase d'exposition de toute image sélectionnée, de déplacement de l'image projetée par rapport à la matière photo-sensible en déplaçant la grille linéaire et la matière photo-sensible ensemble par incréments horizontaux.

6. Procédé selon l'une quelconque des revendications précédentes, caractérisé en ce que chaque marquage est positionné mécaniquement pour positionner l'image de film associée.

7. Procédé selon l'une quelconque des revendications 1 à 5, caractérisé en ce que chaque marquage est positionné optiquement pour positionner l'image de film associée.

8. Procédé selon l'une quelconque des revendications 1 à 7, caractérisé en ce que le marquage sur la surface d'image entourant chaque image consiste en plusieurs éléments de marquage, le positionnement étant effectué en détectant les éléments de marquage pour produire un signal pour chaque élément de marquage et en réglant la position de l'image de film jusqu'à ce que les signaux soient pratiquement égaux.

9. Procédé selon la revendication 8, caractérisé en ce que la détection des éléments de marquage est effectuée par une source optique de balayage.

10. Procédé selon la revendication 8, caractérisé en ce que la détection des éléments de marquage est effectuée par un capteur optique de balayage.

11. Procédé selon la revendication 6, charactérisé en ce que le marquage sur la surface d'image entourant chaque image consiste en plusieurs ouvertures et en ce que la phase de positionnement consiste à aligner les ouvertures avec des doigts de positionnement et à faire passer les doigts dans les ouvertures.

12. Appareil de tirage à projection pour former un stéréogramme à partir de plusieurs images de film portant chacune une image (91) du même sujet, les images étant en relation stéreoscopique, comprenant un projecteur optique (13) avec une source de lumière (92) et un objectif d'agrandisseur (93), un support (41, 59 ou 73) pour la pluralité d'images de film et un support pour une matière photo-sensible (95), caractérisé par un dispositif de positionnement (49, ou Figure 8 ou 9) réagissant à un marquage (85, 86 ou 90) sur la surface d'image entourant chaque image (91) pour positionner l'image dans une position voulue en fonction du marquage et par rapport au projecteur optique (13), les marquages ayant été faits en fonction de points homologues de chacune des images, points définis comme deux images de points dans un couple d'images en relation stéréoscopique, ces images de points se correspondant exactement; une grille linéaire (97) disposées entre l'image de film et la matière photo-sensible (95), la grille linéaire comportant une configuration répétitive de parties opaques (98) et de parties transparentes (99) alternées, la largeur de la partie transparente dans chaque répétition de base de la configuration étant égale à largeur totale de la répétition de base divisée par le nombre d'images à tirer, le projecteur optique étant capable de projeter optiquement chaque image à travers la grille linéaire sur la matière photo-sensible de manière à projeter le point homologue vers un point sélectionné sur la matière, et à exposer sur la matière une partie de chaque image égale à la largeur donnée des parties transparentes; et un dispositif pour produire un mouvement incrémental relatif linéaire entre la grille linéaire et la matière, chaque mouvement incrémental étant égal à la largeur d'une partie transparente.

13. Appareil selon la revendication 12, caractérisé en ce que le dispositif de mouvement incrémental provoque le déplacement de la grille linéaire (97).

14. Appareil selon la revendication 13, destiné à être utilisé quand les images de film sont sur une bande de film continue (83) caractérisé en ce que le dispositif de mouvement incrémental provoque un mouvement de la grille linéaire (97) dans la même direction que le mouvement de la bande de film avant le positionnement de chaque image de film.

15. Appareil selon la revendication 12, destiné à être utilisé lorsque les images de film sont sur une bande de film continue (83) caractérisé en ce que le dispositif de mouvement incrémental provoque un mouvement de la matière photo-sensible (95) dans une direction opposée au mouvement de la bande de film avant le positionnement de chaque image de film.

16. Appareil de tirage à projection selon l'une quelconque des revendications 12 à 15, caractérisé en ce que l'objectif d'agrandisseur (93) est mobile par incréments horizontaux pour déplacer l'image projetée par rapport à la matière photo-sensible avant la phase d'exposition pour cette image.

17. Appareil de tirage à projection selon l'une quelconque des revendications 10 à 15, caractérisé en ce que la grille linéaire (97) et la matière photo-sensible (95) sont mobiles ensemble par incréments horizontaux pour déplacer l'image projetée par rapport à la matière photo-sensible avant la phase d'exposition pour cette image.

18. Appareil selon l'une quelconque des revendications 12 à 17, caractérisé en ce que le dispositif de positionnement comporte un doigt rétractable (49) qui peut s'engager et passer au travers d'une ouverture constituent un marquage sur la surface d'image entourant chaque image.

19. Appareil selon la revendication 12, caractérisé en ce que le dispositif de positionnement consiste en un dispositif optique (74) pour détecter le marquage sur la surface d'image entourant chaque image et produire un signal pour chaque marquage.

20. Appareil selon la revendication 19, caractérisé en ce que le dispositif optique comporte une source de lumière (75) et un dispositif de sortie (78) sensible à la lumière, la source ou le dispositif de sortie étant susceptible de balayer chaque marquage.

21. Appareil selon la revendication 20, caractérisé en ce que le dispositif optique consiste en une source lumineuse (75) à l'état solide, et un capteur optique (78) à éléments multiples.

22. Appareil selon l'une quelconque des revendications 12 à 21, dans lequel le marquage sur la surface d'image entourant chaque image consiste en plusieurs éléments de marquage (85, 86 ou 90), et caractérisé en ce que le dispositif de positionnement comporte un dispositif réagissant aux éléments de marquage pour régler l'image de film à la position désirée.

23. Appareil selon la revendication 22, caractérisé en ce que chacun des éléments de marquage a une orientation relative différente sur l'image de film (Figure 2 ou 3).

24. Appareil selon la revendication 22 ou 23, caractérisé en ce que le dispositif de positionnement comporte un capteur (67) pour détecter chaque élément de marquage sur la surface d'image entourant une image respective et produire un signal pour chaque élément de marquage; et un comparateur (69) pour déterminer si les signaux sont pratiquement égaux.

**Patentansprüche**

1. Verfahren zur Herstellung eines Stereogramms aus einer Vielzahl von Film- Bildfenstern, die alle ein Bild desselben Objekts enthalten und in Stereobeziehung zueinander stehen, wobei die Bilder Bildfenster um Bildfenster zur Herstellung einer Serie von Bildern auf fotoempfindlichem Material belichtet werden, die ihrerseits dann mittels eines Betrachtungsschirms betrachtbar sind, dadurch gekennzeichnet, daß die Film- Bildfenster ein jedes Bild umgebendes Bildfenstergebiet haben, das entsprechend homologer Punkte (definiert als zwei Punktbilder bei einem in einer Stereobeziehung stehenden Bilderpaar, deren Punktbilder sich exakt entsprechen) jedes der Bilder markiert ist, und daß ein Liniennetz mit einem sich wiederholenden Muster von alternierend angeordneten lichtundurchlässigen un transparenten Abschnitten angebracht wird, wobei die Breite des transparenten Abschnitts jeder Grundwiederholung des Musters gleich der Gesamtbreite der Grundwiederholung dividiert durch die Zahl der zu druckenden Bildfenster ist, und das Liniennetz dem fotoempfindlichen Material überlagert wird, daß die Markierung an dem das erste Bild umgebenden Bildfenstergebiet zur Lokalisierung des ersten Bildes relativ zu einem optischen Projektor benutzt wird, so daß der homologe Punkt des ersten Bildes auf einen ausgewählten Punkt auf dem Material projiziert wird, daß auf dem Material ein erster Teil des ersten Bildes, der gleich der Breite des transparenten Abschnitts des Liniennetzes ist, belichtet wird, wobei das Liniennetz stationär gehalten wird, daß die Markierung an dem das zweite Bild umgebenden Bildfenstergebiet zur Lokalisierung des zweiten Bildfensters relativ zu dem optischen Projektor benutzt wird, so daß der homologe Punkt des zweiten Bildes auf den ausgewählten Punkt auf dem Material projiziert wird, daß auf dem Material ein zweiter Teil des zweiten Bildes, der gleich der Breite des transparenten Abschnitts des Liniennetzes ist, belichtet wird, wobei das Liniennetz stationär gehalten wird, nachdem eine der Breite des transparenten Abschnitts entsprechende lineare inkrementale Relativbewegung zwischen dem Liniennetz und dem Material erfolgt ist, daß sequentiell die Ausrichtungs- und Belichtungsschritte für jedes verbleibende Bildfenster wiederholt werden, und daß ein Betrachtungsschirm über das anschliessend entwickelte Material gelegt wird.

2. Verfahren nach Anspruch 1, dadurch gekennzeichnet, daß sich die Vielzahl von Film-Bildfenstern auf einem kontinuierlichen Streifen befindet, und daß die inkrementale Relativbewegung einer Bewegung des Liniennetzes in der Richtung entspricht, in der auch der Streifen bewegt wird, um das zweite sowie die restlichen Bildfenster relativ zum optischen Projektor auszurichten.

3. Verfahren nach Anspruch 1, dadurch gekennzeichnet, daß sich die Vielzahl von Film-Bildfenstern auf einem kontinuierlichen Streifen befindet, und daß die inkrementale Relativbewegung einer Bewegung des fotoempfindlichen Materials in einer Richtung entspricht, die entgegengesetzt der Richtung ist, in der der Streifen bewegt wird, um das zweite sowie die restlichen Bildfenster relativ zum optischen Projektor auszurichten.

4. Verfahren nach einem der vorstehenden Ansprüche, dadurch gekennzeichnet, daß vor der Belichtung eines jeden ausgewählten Bildes das projizierte Bild relativ zu dem fotoempfindlichen Material dadurch verschoben wird, daß ein Vergrößerungsobjektiv, das das Bild auf das fotoempfindliche Material projiziert, um horizontale inkrementale Strecken bewegt wird.

5. Verfahren nach einem der Ansprüche 1 bis 3, dadurch gekennzeichnet, daß vor der Belichtung eines jeden ausgewählten Bildes das projizierte Bild relativ zu dem fotoempfindlichen Material dadurch verschoben wird, daß das Liniennetz und das fotoempfindliche Material gemeinsam um horizontale inkrementale Strecken verschoben werden.

6. Verfahren nach einem der vorstehenden Ansprüche, dadurch gekennzeichnet, daß jede Markierung zur Lokalisierung des entsprechenden Film- Bildfensters mechanisch registriert wird.

7. Verfahren nach einem der Ansprüche 1 bis 5, dadurch gekennzeichnet, daß jede Markierung zur Lokalisierung des entsprechenden Film- Bildfensters optisch registriert wird.

8. Verfahren nach einem der Ansprüche 1 bis 7, dadurch gekennzeichnet, daß die Markierung auf dem jedes Bild umgebenden Bildfenstergebiet eine Vielzahl von Markierungselementen aufweist, und die Ausrichtung (Lokalisierung) dadurch ausgeführt wird, daß die Markierungselemente zur Erzeugung eines Signals für jedes Markierungselement erfaßt werden, und daß die Position der Film- Bildfenster justiert wird, bis die Signale im wesentlichen gleich sind.

9. Verfahren nach Anspruch 8, dadurch gekennzeichnet, daß die Erfassung der Markierungselemente durch eine Abtastung mittels einer optischen Quelle ausgeführt wird.

10. Verfahren nach Anspruch 8, dadurch gekennzeichnet, daß die Erfassung der Markierungselemente durch eine Abtastung mittels eines optischen Sensors ausgeführt wird.

11. Verfahren nach Anspruch 6, dadurch gekennzeichnet, daß die Markierung auf dem jedes Bild umgebenden Bildfenstergebiet eine Vielzahl von Öffnungen aufweist, und der Ausrichtungsschritt die Ausrichtung der Öffnungen mit Registrierungszapfen und die Erstreckung der Zapfen durch die Öffnungen umfaßt.

12. Projektions- Druckgerät zur Herstellung eines Stereogramms aus einer Vielzahl von Film- Bildfenstern, von denen jedes ein Bild (91) desselben Objekts trägt, und die in einer Stereo-Beziehung zueinander stehen, mit einem optischen Projektor (13) mit einer Lichtquelle (92) und einem Vergrößerungsobjektiv (93), einem Träger (41, 59 oder 73) für die Vielzahl von Bildfenstern und einem Träger für das fotoempfindliche Material (95), dadurch gekennzeichnet, daß eine Erfassungseinrichtung (49 bzw. Figur 8 oder 9) vorhanden ist, die auf eine Markierung (85, 86 oder 90) an dem jedes Bild (91) umgebenden Bildfenstergebiet zur Ausrichtung des Bildfensters in der gewünschten Stellung entsprechend der Markierung und relativ zu dem optischen Projektor (13) anspricht, daß die Markierungen gemäß homologer Punkte (definiert als zwei Punktbilder bei einem in einer Stereo-Beziehung stehenden Bilderpaar, deren Punktbilder einander exakt entsprechen) jedes der Bilder ausgeführt sind, daß zwischen dem Film- Bildfenster und dem fotoempfindlichen Material (95) ein Liniennetz (97) angeordnet ist, das ein sich wiederholendes Muster aus alternierend angeordneten lichtundurchlässigen (98) und lichtdurchlässigen (99) Abschnitten aufweist, wobei die Breite der lichtdurchlässigen Abschnitte in jeder Grundwiederholung des Musters gleich der Gesamtbreite der Grundwiederholung geteilt durch die Zahl der zu druckenden Bildfenster ist, daß der optische Projektor jedes Bild durch das Liniennetz auf das fotoempfindliche Material derart optisch projizieren kann, daß der homologe Punkt auf einen ausgewählten Punkt auf dem Material projiziert wird, und auf dem Material ein Teil eines jeden Bildes belichtet wird, der gleich der gegebenen Breite des lichtdurchlässigen Abschnittes ist, und daß eine Einrichtung vorhanden ist, die das Liniennetzt und das Material um eine linear inkrementale Strecke relativ bewegt, wobei die inkrementale Strecke gleich der Breite eines lichtdurchlässigen Abschnittes ist.

13. Gerät nach Anspruch 12, dadurch gekennzeichnet, daß die Einrichtung, did die inkrementale Bewegung erzeugt, das Liniennetz (97) bewegt.

14. Gerät nach Anspruch 13, zur Verwendung mit einer Vielzahl von auf einem kontinuierlichen Filmstreifen (83) vorhandenen Film- Bildfenstern, dadurch gekennzeichnet, daß die Einrichtung, die die inkrementale Bewegung hervorruft, das Liniennetz (97) in derselben Richtung wie den Filmstreifen vor der Ausrichtung eines jeden Film- Bildfensters bewegt.

15. Gerät nach Anspruch 12 zur Verwendung mit einer auf einem kontinuierlichen Filmstreifen (83) befindlichen Vielzahl von Film- Bildfenstern, dadurch gekennzeichnet, daß die Einrichtung, die die inkrementale Bewegung erzeugt, eine Bewegung des fotoempfindlichen Materials (95) in einer Richtung entgegengesetzt der Richtung der Bewegung des Filmstreifens vor der Ausrichtung der Film- Bildfenster erzeugt.

16. Gerät nach einem der Ansprüche 12 bis 15, dadurch gekennzeichnet, daß das Vergrößerungsobjektiv (93) um horizontale inkrementale Strecken verschiebbar ist, um das projizierte Bild relativ zu dem fotoempfindlichen Material vor der Belichtung mit dem Bild zu verschieben.

17. Gerät nach einem der Ansprüche 12 bis 15, dadurch gekennzeichnet, daß das Liniennetz (97) und das fotoempfindliche Material (95) gemeinsam um horizontale inkrementale Strecken zur Verschiebung des projizierten Bildes relativ zu dem fotoempfindlichen Material vor der Belichtung mit dem Bild verschiebbar sind.

18. Gerät nach einem der Ansprüche 12 bis 15, dadurch gekennzeichnet, daß die Erfassungseinrichtung einen zurückziehbaren Zapfen (49) aufweist, der mit einer Öffnung, die eine Markierung auf dem jedes Bild umgebenden Bildfenstergebiet bildet, in Eingriff treten und sich durch diese hindurch erstrecken kann.

19. Gerät nach Anspruch 12, dadurch gekennzeichnet, daß die Erfassungseinrichtung eine optische Einrichtung (74) aufweist, die die Markierung auf dem jedes Bild umgebenden Bildfenstergebiet erfaßt und ein Signal für jede Markierung erzeugt.

20. Gerät nach Anspruch 19, dadurch gekennzeichnet, daß die optische Einrichtung eine Lichtquelle (75) und eine lichtempfindliche Ausgabeeinrichtung (78) aufweist, wobei entweder die Lichtquelle oder die Ausgabeeinrichtung die Markierungen abtasten können.

21. Gerät nach Anspruch 20, dadurch gekennzeichnet, daß die optische Einrichtung eine Festkörper-Lichtquelle (75) und einen optischen Vielelementsensor (78) aufweist.

22. Gerät nach einem der Ansprüche 12 bis 21, bei dem die Markierung auf dem jedes Bild umgebenden Bildfenstergebiet eine Vielzahl von Markierungselementen (85, 86 oder 90) aufweist, dadurch gekennzeichnet, daß die Erfassungseinrichtung Mittel aufweist, die auf die Markierungselemente zur Justierung des Film- Bildfensters in die gewünschte Stellung ansprechen.

23. Gerät nach Anspruch 22, dadurch gekennzeichnet, daß jedes der Markierungselemente eine unterschiedliche Relativorientierung zu dem Film- Bildfenster hat (Figur 2 oder 4).

24. Gerät nach Anspruch 22 oder 23, dadurch gekennzeichnet, daß die Erfassungseinrichtung einen Sensor (67), der jedes Markierungselement auf dem das entsprechende Bild umgebenden Bildfenstergebiet erfaßt und ein Signal für jedes Markierungselement erzeugt, und einen Komperator (69) aufweist, der bestimmt, ob die Signale im wesentlichen gleich sind.

**0 002 945**

Fig. 1.

Fig. 2.

Fig. 4.

Fig. 3.

Fig. 9.

Fig.5.

92
94
13
89
93
83

14
99
97
98
95
2
99

RIGHT EYE   LEFT EYE

Fig.6.
101
96
100
95

Fig.7.
53
61
40
50
55
62
44
49
45
43
42
47
51 83 57 58 46 46
59
42
86 90
54 55 56 41 60 48
52

72
73
72
83
71
71

Fig.10.

92

78 77 76
76 77 78
91
75
83 74
75

Fig.9.
93

0 002 945